(19) **Europäisches Patentamt / European Patent Office / Office européen des brevets**

(11) **EP 1 253 625 B1**

(12) **EUROPÄISCHE PATENTSCHRIFT**

(45) Veröffentlichungstag und Bekanntmachung des Hinweises auf die Patenterteilung:
**04.07.2007 Patentblatt 2007/27**

(51) Int Cl.:
***H01J 61/44*** *(2006.01)*    ***C09K 11/77*** *(2006.01)*

(21) Anmeldenummer: **02100407.2**

(22) Anmeldetag: **24.04.2002**

(54) **Gasentladungslampe mit Down-Conversion-Leuchtstoff**

Gas discharge lamp with down-conversion phosphor

Lampe à décharge avec matière luminescente

(84) Benannte Vertragsstaaten:
**DE FR GB**

(30) Priorität: **27.04.2001 DE 10121096**

(43) Veröffentlichungstag der Anmeldung:
**30.10.2002 Patentblatt 2002/44**

(73) Patentinhaber:
• **Philips Intellectual Property & Standards GmbH**
**20099 Hamburg (DE)**
Benannte Vertragsstaaten:
**DE**
• **Koninklijke Philips Electronics N.V.**
**5621 BA Eindhoven (NL)**
Benannte Vertragsstaaten:
**FR GB**

(72) Erfinder:
• **Feldmann, Klaus**
**c/o Philips Corp.Intell.Prop.GmbH**
**52066, Aachen (DE)**
• **Maya Angelova, Dr. Doytcheva**
**52066, Aachen (DE)**
• **Ronda, Cornelis Reinder**
**52066, Aachen (DE)**
• **Jüstel, Thomas**
**52066, Aachen (DE)**

(74) Vertreter: **Volmer, Georg et al**
**Philips Intellectual Property & Standards GmbH,**
**Postfach 50 04 42**
**52088 Aachen (DE)**

(56) Entgegenhaltungen:
**EP-A2- 1 111 025**

• **X. CHEN, T. NGUYEN, Q. LUU, B. DI BARTOLO: "Concentration dependence of visible up-conversion luminescence in the laser crystal Gd3Ga5O12 doped with erbium" JOURNAL OF LUMINESCENCE, Bd. 85, 2000, Seiten 295-299, XP002314824**
• **WEGH R T ET AL: "VISIBLE QUANTUM CUTTING IN EU3+-DOPED GADOLINIUM FLUORIDES VIA DOWNCONVERSION" JOURNAL OF LUMINESCENCE, AMSTERDAM, NL, Bd. 82, Nr. 2, August 1999 (1999-08), Seiten 93-104, XP001079786 ISSN: 0022-2313**
• **WEGH R T ET AL: "VISIBLE QUANTUM CUTTING VIA DOWNCONVERSION IN LIGDF4: ER3+, TB3+ UPON ER3+ F411 4F105D EXCITATION" JOURNAL OF LUMINESCENCE, AMSTERDAM, NL, Bd. 90, Nr. 3/4, August 2000 (2000-08), Seiten 111-122, XP001079788 ISSN: 0022-2313**
• **MEIJERINK A ET AL: "VUV SPECTROSCOPY OF LANTHANIDES: EXTENDING THE HORIZON" MATERIALS SCIENCE FORUM, AEDERMANNSFDORF, CH, Bd. 315-317, Oktober 1998 (1998-10), Seiten 11-26, XP001079790 ISSN: 0255-5476**

EP 1 253 625 B1

**Beschreibung**

Die Erfindung betrifft eine Gasentladungslampe, ausgerüstet mit einem Gasentladungsgefäß, gefüllt mit einer Gasfüllung, die geeignet ist, eine Gasentladung, die VUV-Strahlung emittiert, zu unterstützen, mit einer Leuchtstoffbeschichtung, die einen Down-Conversion-Leuchtstoff enthält, und mit Mitteln zur Zündung und Aufrechterhaltung einer Gasentladung.

Konventionelle Leuchtstofflampen sind Quecksilbergasentladungslampen, deren Lichtausstrahlung auf einer Quecksilberniederdruckgasentladung basiert. Eine Quecksilberniedrdruckgasentladung emittiert Strahlung überwiegend im nahen UV mit einem Maximum bei 254 nm, die durch UV-Leuchtstoffe in sichtbares Licht umgewandelt wird.

Die Quecksilbergasentladungslampe hat eine ausgereifte Technologie und ist in Bezug auf die Lampeneffizienz $\eta_{lamp}$ durch andere Lampentechnologien nur schwer zu erreichen oder gar zu übertreffen.

Das Quecksilber in der Gasfüllung wird jedoch verstärkt als umweltschädliche und giftige Substanz angesehen, die in modernen Massenprodukten aufgrund der Umweltgefährdung bei Anwendung, Produktion und Entsorgung möglichst vermieden werden sollte. DeMegffi bemüht man sich seit einiger Zeit um die Entwicklung alternativer Lampentechnologien.

Eine der quecksilberfreien bzw. quecksilberarmen Alternativen zur herkömmlichen Quecksilbergasentladungslampe ist die Xenon-Niederdruckgasentladungslampe, die eine Gasfüllung hat, die überwiegend Xenon enthält. Eine Gasentladung in einer Xenon-Niederdruckgasentladungslampe emittiert Vakuum-Ultraviolettstrahlung (VUV-Strahlung), im Gegensatz zu der UV-Strahlung der Quecksilberentladung. Die VUV-Strahlung wird von Excimeren, z B. $Xe_2^*$, erzeugt und ist eine molekulare Bandenstrahlung mit einem breiten Spektrum im Bereich um 172 nm.

Mit dieser Lampentechnologie werden auch schon Entladungseffizienzen $\eta_{dis}$ von 65 % erreicht.

Ein weiterer Vorteil der Xenon-Niederdruckgasentladungslampe ist die kurze Ansprechzeit der Gasentladung, die sie als Signallampe für Automobile, als Lampe für Kopier- und Faxgeräte und als Wasserdesinfektionslampe interessant macht.

Aber obwohl die Xenon-Niederdruckgasentladungslampe eine Entladungseffizienz $\eta_{dis}$ erreicht, die mit der der Quecksilbergasentladungslampe vergleichbar ist, ist die Lampeneffizienz $\eta_{lamp}$ der Xenon-Niederdruckgasentladungslampe noch deutlich niedriger als die der Quecksilbergasentladungslampe.

Grundsätzlich setzt sich die Lampeneffizienz $\eta_{lamp}$ aus den Komponenten Entladungseffizienz $\eta_{dis}$, Leuchtstoffeffizienz $\eta_{phos}$, dem Anteil des erzeugten sichtbaren Lichtes, das die Lampe verlässt $\eta_{esc}$ und dem Anteil $\eta_{vuv}$ der UV-Strahlung, die vom Leuchtstoff erzeugt wird, zusammen:

$$\eta_{lamp} = \eta_{dis} \cdot \eta_{phos} \cdot \eta_{esc} \cdot \eta_{vuv}$$

Eine Handicap der herkömmlichen Xenon-Niederdruckgasentladungslampe liegt in der vom Prinzip her ineffektiven Umwandlung eines energiereichen VUV-Photons mit einer Wellenlängen von etwa 172 nm in ein vergleichsweise energiearmes Photon aus dem sichtbaren Spektrum von 400 bis 700 nm durch die Leuchtstoffbeschichtung der Lampe. Selbst wenn die Quantenausbeute des Leuchtstoffs bei 100% liegt, wird durch die Konversion eines VUV-Photons in eine sichtbares Photon durchschnittlich 65 % der Energie durch strahlenlose Übergänge verloren.

Überraschenderweise ist es jedoch bereits gelungen, VUV-Leuchtstoffe zu entwickeln, die eine Quantenausbeute von mehr als 100 % für die Umwandlung von VUV-Photonen in sichtbare Photonen erreichen. Diese Quantenausbeute wird dadurch erzielt, dass ein VUV-Quant mit einer Elektronenenergie von 7.3 eV in zwei sichtbare Quanten mit einer Elektronenenergie um 2.5 eV konvertiert wird Derartige Leuchtstoffe für Xenon-Niederdruckgasentladungslampen sind beispielsweise aus René T. Wegh, Harry Donker, Koentraad D. Oskam, Andries Meijerink "Visible Quantum Cutting in $LiGdF_4$: $Eu^{3+}$ through Downconversion" Science 283, 663, bekannt.

Ein weiteres Dokument von R.T. Wegh, E.V.D. van Loef und A. Meijerink " Visible quantum cutting via downconversion in $LiGdF_4$:$Eu^{3+}$, $Tb^{3+}$ upon $Er^{3+}$ $4f^{11} \rightarrow 4f^{10}5d$ excitation", Journal of Luminescence 90 (2000) 111-122, offenbart Leuchtstoffe mit Zusammensetzungen, die die Lanthanoidionen-Paarung Gd/Er/Tb enthalten.

In Analogie zu den schon länger bekannten Multiphotonen-Leuchtstoffen, die durch "Upconversion" aus zwei sichtbaren langwelligen Photonen ein kurzwelliges Photon erzeugen, werden diese neuen Leuchtstoffe, die aus einem kurzwelligen Photon zwei langwellige Photonen erzeugen, als Down-Conversion-Leuchtstoffe bezeichnet.

Aber obwohl die Quantenausbeute der bekannten Down-Conversion-Leuchtstoffe hoch ist, bedeutet dies nicht, dass dadurch auch die Leuchtstoffeffizienz $\eta_{phos}$ hoch ist. Für die Leuchtstoffeffizienz $\eta_{phos}$ spielt nicht nur die Quantenausbeute, sondern auch die Fähigkeit des Leuchtstoffes, die zu konvertierende VUV-Strahlung zu absorbieren, eine Rolle. Das Absorptionsvermögen der bekannten Down-Conversion-Leuchtstoffe ist jedoch recht schwach. Es wird zuviel Energie durch unerwünschte Absorptionen im Gitter verloren und dadurch die Besetzung der angeregten Zustände vermindert.

Es ist eine Aufgabe der vorliegenden Erfindung, eine Gasentladungslampe, ausgerüstet mit einem Gasentladungsgefäß, gefüllt mit einer Gasfüllung, die geeignet ist für eine Gasentladung, die VUV-Strahlung emittiert, mit einer Leuchtstoffbeschichtung, die einen Down-Conversion-Leuchtstoff enthält, und mit Mitteln zur Zündung und Aufrechterhaltung einer Gasentladung mit verbesserter Effizienz zur Verfügung zu stellen.

Erfindungsgemäß wird die Aufgabe gelöst durch eine Gasentladungslampe, ausgerüstet mit einem Gasentladungsgefäß, gefüllt mit einer Gasfüllung, die geeignet ist, eine Gasentladung, die VUV-Strahlung emittiert, zu unterstützen, mit einer Leuchtstoffbeschichtung die einen Down-Conversion-Leuchtstoff enthält, und mit Mitteln zur Zündung und Aufrechterhaltung einer Gasentladung, bei der der Down-Conversion-Leuchtstoff ein Paar von Aktivatoren aus einem ersten Lanthanoiden-Ion und einem zweiten Lanthanoiden-Ion ausgewählt ist aus der Gruppe Gadolinium(III)-Europium(III); Gadolinium(III)-Holmium(III); Erbium(III)-Gadolinium(III) und Praseodym(III)-Mängan(II) und einen Sensibilisator, ausgewählt aus der Gruppe des Kupfer(I)-Ions, des Silber(I)-Ions, des Gold(I)-Ions, des Zink(II)-Ions, des Gallium(III)-Ions, des Indium(III)-Ions, des Thallium(III)-Ions, des Germanium(IV)-Ions, des Zinn(IV)-Ions und des Blei(IV)-Ions enthält.

Im Rahmen der vorliegenden Erfindung ist es bevorzugt, dass der Down-Conversion-Leuchtstoff einen Cosensibilisator ausgewählt aus der Gruppe des Thallium(I)-Ions, des Blei(II)-Ions, des Bismut(III)-Ions, des Indium(I)-Ions, des Zinn(II)-Ions, des Antimon(III)-Ions, des Gallium(I)-Ions, des Germanium(II)-Ions und des Arsen(III)-Ions enthält.

Im Rahmen der vorliegenden Erfindung ist es auch bevorzugt, dass der Down-Conversion-Leuchtstoff einen Cosensibilisator ausgewählt aus der Gruppe des Cer(III)-Ions, des Praseodym(III)-Ions, des Neodym(III)-Ions, des Samarium(III)-Ions, des Europium(III)-Ions, des Gadolinium(III)-Ions, des Terbium(III)-Ions, des Dysprosium(III)-Ions, des Holmium(III)-Ions, des Erbium(III)-Ions, des Thulium(III)-Ions, des Ytterbium(III)-Ions und des Lutetium(III)-Ions enthält.

Es kann auch bevorzugt sein, der Down-Conversion-Leuchtstoff als das erste Lanthanoiden-Ion das Gadolinium(III)-Ion und als das zweite Lanthanoiden-Ion Holmium(III)-Ion oder das Europium(III)-Ion und einen Coaktivator ausgewählt aus der Gruppe des Terbium(III)-Ions, des Ytterbium(III)-Ions, des Dysprosium(III)-Ions, des Europium(III)-Ions, Samarium(III)-Ions und des Mangan(II)-Ions enthält.

Es kann auch bevorzugt sein, dass das Wirtsgitter des Down-Conversion-Leuchtstoffs ein Fluorid ist.

Es ist besonders bevorzugt, dass der Down-Conversion-Leuchtstoff das erste Lanthanoiden-Ion in einer Konzentration von 10.0 bis 99.98 Mol-%, das zweite Lanthanoiden-Ion in einer Konzentration von 0.01 bis 30.0 Mol-% und den Sensibilisator in einer Konzentration von 0.01 bis 30.0 Mol-% enthält.

Nach einer Ausführungsform der erfindungsgemäßen Gasentladungslampe enthält der Down-Conversion-Leuchtstoff den Sensibilisator in einer Konzentration von 5.0 Mol-%. bis 20,0 Mol%.

Nach einer anderen Ausführungsform der Erfindung enthält der Down-Conversion-Leuchtstoff den Cosensibilisator in einer Konzentration von 0.01 bis 30.0 Mol-%.

Nach einer weiteren Ausführungsform der Erfindung enthält der Down-Conversion-Leuchtstoff den Coaktivator in einer Konzentration von 0.5 Mol-%.

Die Erfindung betrifft auch einen Down-Conversion-Leuchtstoff, der in einem Wirtsgitter ein Paar von Aktivatoren aus einem ersten Lanthanoiden-Ion und einem zweiten Lanthanoiden-Ion ausgewählt ist aus der Gruppe Gadolinium(III)-Europium(III); Gadolinium(III)-Holmium(III); Erbium(III)-Gadolinium(III) und Praseodym(III)-Mängan(II) und einen Sensibilisator, ausgewählt aus der Gruppe des Kupfer(I)-Ions, des Silber(I)-Ions, des Gold(I)-Ions, des Zink(II)-Ions, des Gallium(III)-Ions, des Indium(III)-Ions, des Thallium(III)-Ions, des Germanium(IV)-Ions, des Zinn(IV)-Ions und des Blei(IV)-Ions enthält.

Der Leuchtstoff zeichnet sich durch eine hohe Quantenausbeute, eine hohe Absorption von VUV-Photonen und außerdem eine hohe chemische Beständigkeit aus und ist daher für kommerzielle Anwendungen auch in Plasmabildschirmen besonders geeignet. Ein derartiger Leuchtstoff kann vorteilhaft auch für Signallampen in Automobilen eingesetzt werden.

Nachfolgend wird die Erfindung weiter erläutert.

Eine Gasentladungslampe nach der Erfindung umfasst ein Gasentladungsgefäß mit einer Gasfüllung und mit mindestens einer Wandung, die eine für sichtbare Strahlung mindestens teilweise transparente Fläche mit einer Leuchtstoffschicht aufweist. Die Leuchtstoffschicht enthält eine Leuchtstoffzubereitung mit einem aus einem anorganischen, kristallinen Wirtsgitter, der seine Leuchtfähigkeit durch eine Aktivierung durch ein Aktivatorpaar aus einem ersten und einem zweiten Lanthanoiden-Ion erworben hat. Der Down-Conversion-Leuchtstoff wird durch einen Sensibilisator aus der Gruppe des Kupfer(I)-Ions, des Silber(I)-Ions, des Gold(I)-Ions, des Zink(II)-Ions, des Gallium(III)-Ions, des Indium(III)-Ions, des Thallium(III)-Ions, des Germanium(IV)-Ions, des Zinn(IV)-Ions und des Blei(IV)-Ions sensibilisert. Außerdem ist die Gasentladungslampe mit einer Elektrodenstruktur zur Zündung der Gasentladung und mit weiteren Mitteln zur Zündung und Aufrechterhaltung der Gasentladung ausgerüstet.

Bevorzugt ist die Gasentladungslampe eine Xenon-Niederdruckgasentladungslampe. Es sind verschiedene Typen von Xenon-Niederdruckgasentladungslampen bekannt, die sich durch die Zündung der Gasentladung unterscheiden. Das Spektrum der Gasentladung enthält zunächst einen hohen Anteil an für das menschliche Auge unsichtbarer VUV-Strahlung, die innerhalb der Beschichtung mit VUV-Leuchtstoffen auf der Innenseite des Gasentladungsgefäßes in sichtbares Licht umgewandelt und abgestrahlt wird.

Im folgenden soll unter Vakuum-Ultraviolettstrahlung elektromagnetische Strahlung mit einer maximalen Emission in einem Wellenlängenbereich zwischen 145 und 185 nm verstanden werden.

In einer typische Bauform für die Gasentladungslampe besteht diese aus einem zylindrischen, mit Xenon gefüllten Lampenkolben aus Glas, auf dessen Wandung außen ein Paar streifenförmiger Elektroden elektrisch isoliert voneinander angeordnet ist. Die streifenförmigen Elektroden erstrecken sich über die gesamte Länge des Lampenkolbens, wobei sie sich mit ihren Längsseiten unter Freilassung von zwei Spalten gegenüberliegen. Die Elektroden sind an die Pole einer Hochspannungsquelle angeschlossen, die mit einer Wechselspannung in der Größenordnung von 20 kHz bis 500 kHz derart betrieben wird, dass sich eine elektrische Entladung nur im Bereich der inneren Oberfläche des Lampenkolbens bildet.

Wenn eine Wechselstromspannung an die Elektroden angelegt wird, kann in dem xenonhaltigen Füllgas eine stille elektrische Ladung gezündet werden. Dadurch bilden sich im Xenon Excimere, d. h. Moleküle, die aus einem angeregten Xenon-Atom und einem Xenon-Atom im Grundzustand bestehen.

$$Xe + X^* = Xe_2^*$$

Die Anregungsenergie wird als VUV-Strahlung mit einer Wellenlänge von $\lambda$ = 170 bis 190 nm wieder abgegeben. Diese Umwandlung von Elektronenenergie in UV-Strahlung erfolgt sehr effizient. Die erzeugten VUV-Photonen werden von den Leuchtstoffen der Leuchtstoffschicht absorbiert und die Anregungsenergie wird in dem längerwelligen Bereich des Spektrums teilweise wieder abgegeben.

Grundsätzlich sind für das Entladungsgefäß eine Vielzahl von Bauformen wie Platten, einfache Rohre, Koaxialrohre, gerade, u-förmig, kreisförmig gebogene oder gewendelte, zylinderförmige oder anders geformte Entladungsröhren möglich.

Als Material für das Entladungsgefäßes werden Quarz oder Glassorten verwendet.

Die Elektroden bestehen aus einem Metall, z. B. Aluminium oder Silber, einer Metallegierung oder aus einer transparenten leitfähigen anorganischen Verbindung z. B. ITO. Sie können als Beschichtung, als aufgeklebte Folie, als Draht oder als Drahtnetz ausgebildet sein.

Das Entladungsgefäß ist mit einem Gasgemisch, das ein Edelgas wie Xenon, Krypton, Neon oder Helium enthält, gefüllt. Gasfüllungen, die überwiegend aus sauerstofffreiem Xenon von niedrigem Gasdruck, zB. 2 Torr, bestehen, sind bevorzugt. Die Gasfüllung kann auch eine kleine Menge Quecksilber enthalten, um während der Entladung einen niedrigen Gasdruck aufrecht zu erhalten.

Die Innenwandung des Gasentladungsgefäßes ist teilweise oder ganz mit einer Leuchtstoffschicht, die ein oder auch mehrere Leuchtstoffe bzw. Leuchtstoffzubereitungen enthält, beschichtet. Weiterhin kann die Leuchtstoffschicht noch organisches oder anorganisches Bindemittel oder eine Bindemittelzusammensetzung enthalten.

Die Leuchtstoffbeschichtung ist bevorzugt auf der Innenwand des Gasentladungsgefäßes als Substrat aufgebracht und kann eine einzelne Leuchtstoffschicht oder mehrere

Leuchtstoffschichten, insbesondere Doppelschichten aus Grund- und Deckschicht, umfassen.

Eine Leuchtstoffbeschichtung mit Grund- und Deckschicht erlaubt es, die Menge des Down-Conversion-Leuchtstoffs in der Deckschicht zu reduzieren und in der Grundschicht einen weniger kostspieligen Leuchtstoff zu verwenden. Die Grundschicht enthält bevorzugt als Leuchtstoff ein Calciumhalophosphat- Leuchtstoff, der ausgewählt ist, um den gewünschten Farbton der Lampe zu erreichen.

Die Deckschicht enthält den Down-Conversion-Leuchtstoff, der so einen wesentlichen Teil der von der Gasentladung erzeugten VUV-Strahlung direkt in die gewünschte Strahlung im sichtbaren Bereich umzuwandeln.

Ein wesentliches Merkmal des erfindungsgemäßen Down-Conversion-Leuchtstoffs ist es, dass er ein Paar von Aktivatoren aus einem ersten und einem zweiten Lanthanoiden-Ion und einen Sensibilisator in einem Wirtsgitter enthält.

Das Aktivatorpaars ist bevorzugt ausgewählt aus der Gruppe Gadolinium(III)-Europium(III); Gadolinium(III)-Holmium(III); Erbium(III)-Gadolinium(III) und Praseodym(III)-Mangan(II).

Der Sensibilisator ist ausgewählt aus der Gruppe des Kupfer(I)-Ions, des Silber(I)-Ions, des Gold(I)-Ions, des Zink(II)-Ions, des Gallium(III)-Ions, des Indium(III)-Ions, des Thallium(III)-Ions, des Germanium(IV)-Ions, des Zinn(IV)-Ions und des Blei(IV)-Ions.

Allgemein bezeichnet man diese Ionen auch entsprechend ihrer Elektronenkonfiguration auch als $d^{10}$-Ionen.

Der Down-Conversion-Leuchtstoff kann auch einen Cosensibilisator enthalten. Dieser kann ausgewählt sein aus der Gruppe des Thallium(I)-Ions, des Blei(II)-Ions, des Bismut(III)-Ions, des Indium(I)-Ions, des Zinn(II)-Ions, des Antimon(III)-Ions, des Gallium(I)-Ions, des Germanium(II)-Ions und des Arsen(III)-Ions. Allgemein bezeichnet man diese Ionen auch entsprechend ihrer Elektronenkonfiguration auch als $s^2$-Ionen. Der Cosensibilisator kann auch ausgewählt sein aus der Gruppe des Cer(III)-Ions, des Praseodym(III)-Ions, des Neodym(III)-Ions, des Samarium(III)-Ions, des Europium(III)-Ions, des Gadolinium(III)-Ions, des Terbium(III)-Ions, des Dysprosium(III)-Ions, des Holmium(III)-Ions, des Erbium(III)-Ions, des Thulium(III)-Ions, des Ytterbium(III)-Ions und des Lutetium(III)-Ions. Allgemein bezeichnet man diese Ionen auch entsprechend ihrer Elektronenkonfiguration auch als $4f^n$-Ionen.

Der Sensibilisator und gegebenenfalls der Cosensibilisator verstärkt die Empfindlichkeit des Down-Conversion-Leuchtstoffs für VUV-Strahlung und macht sie weniger wellenlängenabhängig. Er hat eine starke Eigenabsorption im gewünschten VUV-Bereich von 100 bis 200 nm, der im wesentlichen oberhalb der Eigenabsorption der nicht sensibilisierten Down-Conversion-Leuchtstoffe bei 183, 195 und 202 nm liegt. Die Weiterleitung der Anregungsenergie zum Aktivatorpaar ist mit Verlusten behaftet, weil Gitterstörungen die das Gitter durchquerenden Anregungszustände zur Abgabe von Energie an das Gitter in Form von Wärmeschwingungen veranlassen. Dann wird die reduzierte absorbierte Anregungsenergie an den Aktivator weitergegeben und löst den Down-Converson-Mechanismus aus. Der Down-Conversion-Leuchtstoff lumineszert somit verstärkt, weil er durch den Sensibilisator und gegebenenfalls den Cosensibilisator zur Lumineszenzfähigkeit unter VUV-Strahlung "sensibilisiert" werden ist.

Der Down-Conversion-Leuchtstoff kann auch noch einen Coaktivator enthalten. Der Coaktivator ist ausgewählt aus der Gruppe der dreiwertigen Ionen des Terbiums, Ytterbiums, Dysprosiums, Europiums und Samariums und des zweiwertigen Ions des Mangans. Das Paar von Aktivatoren aus einem ersten Lanthanoiden-Ion und einem zweiten Lanthanoiden-Ion und das Coaktivator-Ion wirkt zusammen bei der sequentiellen Emission von Photonen, mit der der Leuchtstoff mehr als ein sichtbares Photon aus einem VUV-Photon erzeugt.

Der Anregungsmechanismus kann erfolgen durch eine $^8S$-$^6G$- Anregung des Gadolinium(III)-Ions, der ein Cross-relaxation-Übergang zwischen dem Gd (III)-Ion und dem Holmium(III)-ion oder des Europium (IIII)-Ions folgt. Durch den Cross-Relaxation-Übergang geht das Gadolinium(III)-ion vom $^6G$-Zustand in den $^6P$-Zustand über, durch die freiwerdende Energie geht das Holmium(III)-Ion vom $^5I_8$-Zustand in den $^5F_5$-Zustand bzw. das Europium(III)-Ion vom $^7F_0$-Zustand in den $^5D_0$-Zustand über. Anschließend emittiert das Holmium(III)-Ion oder das Europium(III)-Ion ein sichtbares Photon, dessen Energie dem Übergang von $^5F_5$ nach $^5I_8$ bzw. $^5D_0$ nach $^7F_1$ entspricht.

Nach einem Energietransfer vom $^6P$-Zustand des Gadolinium(III)ions auf den Coaktivator emittiert dieser ebenfalls ein sichtbares Photon.

Das Wirtsgitter des Down-Conversion-Leuchtstoffs kann aus einem anorganischen Material wie Fluoride, Oxide, Halogenide, Aluminate, Gallate, Phosphate, Borate oder Silikate bestehen, das mit einigen Prozenten der beiden Aktivatoren dotiert ist. Dabei können die Aktivatoren auf Gitterplätzen oder auf Zwischengitterplätzen des Wirtsgitters angeordnet sein.

Bevorzugt sind Fluoride als Wirtsgitter, wie z. B. Fluoride der Zusammensetzung $M^1F$ mit $M_1$ = Li, Na, K, Rb, Cs oder Fluoride der Zusammensetzung $M^2F_2$ mit $M^2$ = Mg, Ca, Sr, Ba oder Fluoride der Zusammensetzung $M^3F_3$ mit $M^3$ = B, Al, In, Ga, Sc, Y, La, und den Lanthanoiden. Besonders bevorzugt ist $GdF_3$, in dem das erste Lanthanoidaktivatorion $Gd^{3+}$ Bestandteil des Wirtsgitters

ist.

Weiterhin sind als Wirtsgitter ternäre gadoliniumhaltige Fluoride der Zusammensetzung $M^1GdF_4$, $M^1_2GdF_5$, $M^1_3GdF_6$, $M^1Gd_2F_7$, $M^1Gd_3F_{10}$, $M^1_5Gd_9F_{32}$, mit $M_1$ = Li, Na, K, Rb, Cs oder $M^2GdF_5$, $M^2_2GdF_7$, $M^2_3GdF_9$, $M^2Gd_2F_8$, $M^2Gd_3F_{11}$, $M^2Gd_4F_{14}$, $M^2_{13}Gd_6F_{43}$ mit $M^2$ = Mg, Ca, Sr, Ba, Mn, Zn, in denen ebenfalls Gadolinium Bestandteil des Wirtsgitters ist, bevorzugt.

Ebenso sind als Wirtsgitter Fluoride der Zusammensetzung $M^1M^3F_4$, $M^1_2M^3F_5$, $M^1_3M^3F_6$, $M^1M^3_2F_7$, $M^1M^3_3F_{10}$, $M^1_5M^3_9F_{32}$ mit $M_1$ = Li, Na, K, Rb, Cs und mit $M^3$ = B, Al, In, Ga, Sc, Y, La, und den Lanthanoiden, $M^2M^3F_5$, $M^2_2M^3F_7$, $M^2_3M^3F_9$, $M^2M^3_2F_8$, $M^2M^3_3F_{11}$, $M^2M^3_4F_{14}$, $M^2_{13}M^3_6F_{43}$ mit $M^2$ = Mg, Ca, Sr, Ba, Mn, Zn und $M^3$ = B, Al, In, Ga, Sc, Y, La, und den Lanthanoiden; $M^3M^4F_7$, $M^3_2M^4F_{10}$, $M^3_3M^4F_{13}$, $M^3M^4_2F_{11}$, $M^3M^4_3F_{15}$, $M^3M^4_4F_{19}$ mit $M^3$ = B, Al, In, Ga, Sc, Y, La, und den Lanthanoiden und $M^4$ = Ti, Zr, Si, Ge, Sn, Pb, bevorzugt.

Besonders bevorzugte Wirtsgitter sind Fluoride, deren Wirtsgitter auf dem Calciumfluorit-Kristallgittertyp basiert. In diesen Gittern haben die Kationen eine 8fache Koordination. Ebenfalls besonders bevorzugt sind Fluoride deren Gitter sich von $YF_3$-Kristallgittertyp herleitet, in dem die Kationen eine 9fache Koordination haben. Durch die hohen Koordinationszahlen und die unpolaren Liganden zeichnen sich diese Wirtsgitter durch ein niedriges Ligandenfeld für Kationen, die Bestandteil des Wirtsgitters sind, aus.

Die mit dem Aktivatorpaar dotierten Leuchtstoffe enthalten bevorzugt 10 bis 99.8 Mol-% des ersten Lanthanoiden- Ions und 0.01 bis 30 Mol-%, besonders bevorzugt 1.0 Mol-% des zweiten Lanthanoiden-Ions.

Der Down-Conversion-Leuchtstoff kann leicht mit den dreiwertigen Coaktivatoren Terbium, Ytterbium, Dysprosium, Europium, Samarium oder Mangan dotiert werden, wenn man bei der Herstellung der Leuchtstoffe den Ausgangsverbindungen ein Fluorid ausgewählt aus der Gruppe $TbF_3$, $YbF_3$, $DyF_3$, $EuF_3$, $SmF_e$ oder $MnF_2$ zufügt.

Der Absorptionskoeffizient der erfindungsgemäßen sensibilisierten Down-Conversion-Leuchtstoffe ist für die Wellenlängen im Bereich der Xenonstrahlung besonders groß und die Quantenausbeute hoch. Das Wirtsgitter beteiligt sich nicht an dem Lumineszenzprozess, es beeinflusst aber die genaue Lage der Energieniveaus der Aktivatorionen, und infolgedessen die Wellenlängen von Absorption und Emission. Die Emissionsbanden liegen im Bereich vom langen Ultraviolett bis zum Gelborange, jedoch überwiegend im roten und grünen Bereich des elektromagnetischen Spektrums. Die Löschtemperatur dieser Leuchtstoffe liegt bei über 100°C.

Die Korngröße der Leuchtstoffpartikel ist nicht kritisch. Üblicherweise werden die Leuchtstoffe als feinkörnige Pulver mit einer Korngrößenverteilung zwischen 1 und 20 $\mu$m verwendet.

Als Herstellungsverfahren für Leuchtstoffschicht auf einer Wandung des Entladungsgefäßes kommen sowohl Trockenbeschichtungsverfahren, wie z B. elektrostatische Abscheidung oder elektrostatisch unterstütztes Bestäuben, als auch ein Nassbeschichtungsverfahren wie z B. Tauchen oder Sprühen in Betracht. Für Nasabeschichtungsverfahren muss die Leuchtstoffzubeieitung in Wasser, einem organischen Lösemittel, gegebenenfalls zusammen mit einem Dispergiermittel, einem Tensid und einem Antischaummittel, oder einer Bindemittelzubereitung dispergiert werden. Geeignet für Bindemittelzubereitungen für eine Gasentladungslampe nach der Erfindung sind organische oder anorganische Bindemittel, die einer Betriebstemperatur von 250°C ohne Zersetzung, Versprödung oder Verfärbung überstehen.

Beispielsweise kann die Leuchtstoffzubereitung auf eine Wandung des Entladungsgefäßes mittels eines Flow-Coating-Verfahrens aufgebracht werden. Die Beschichtungssuspensionen für das Flow-Coating-Verfahren enthalten Wasser oder eine organischen Verbindung wie Butylacetat als Lösungsmittel. Die Suspension wird durch Zugabe von Hilfsmitteln, wie Stabilisatoren, Verflüssigern Cellulosederivaten, stabilisiert und in ihren rheologischen Eigenschaften beeinflusst. Die Leuchtstoffsuspension wird als dünne Schicht auf die Gefäßwände aufgebracht, getrocknet und bei 600°C eingebrannt.

Es kann auch bevorzugt sein, dass die Leuchtstoffzubereitung für die Leuchtstoffschicht elektrostatisch auf der Innenseite des Entladungsgefäßes abgeschieden wird.

Für eine Gasentladungslampe, die weißes Licht abstrahlen soll, werden bevorzugt ein blauemittierender Leuchtstoff aus der Gruppe $BaMgAl_{10}O_{17}:Eu^{2+}$ und $Sr_5(PO_4)_3Cl: Eu^{2+}$ mit einem rotemittierenden Leuchtstoff aus der Gruppe $ZnGdF_5:Eu$; $Li(Gd,In)F_4:Eu$ und $(Y,Gd)BO_3:Eu$ und mit einem grünemittierenden Leuchtstoff aus der Gruppe $Li(Gd,Ga)F_4:Er,Tb$; $(Ba,Zn)PrF_5:Mn$ und $LaPO_4:Ce,Tb$ oder dem grün-rotemittierendem Leuchtstoff $(Ba,Zn)Gd_2F_8:Ho,Pr$ kombiniert.

Die Leuchtstoffschicht hat üblicherweise eine Schichtdicke von 5 bis 100 $\mu$m.

Das Gefäß wird dann evakuiert, um alle gasförmigen Verunreinigungen, insbesondere Sauerstoff zu entfernen. Anschließend wird das Gefäß mit Xenon gefüllt und verschlossen.

Ausführungsbeispiel 1

Ein zylindrisches Entladungsgefäß aus Glas mit eine Länge von 590 mm, einem Durchmesser von 24 mm und einer Wandstärke von 0,8 mm wird mit Xenon bei einem Druck von 200 hPa gefüllt. Das Entladungsgefäß enthält eine achsparallele Innenelektrode in Form eines Edelmetallstabs mit 2,2 mm Durchmesser. Auf der Außenfläche des Entladungsgefäßes befindet sich die Außenelektrode aus zwei 2 mm breiten Streifen aus Leitsilber, die achsparallel angeordnet und mit der Spannungsversorgung leitend verbunden sind Die Lampe wird mit gepulster Gleichspannung betrieben.

Die Innenwand des Entladungsgefäßes ist mit einer Leuchtstoffschicht beschichtet.

Die Leuchtstoffschicht enthält ein Dreibandenleuchtstoffgemisch mit folgenden Komponenten: $BaMgAl_{10}O_{17}:Eu^{2+}$als blaue Komponente, $LaPO_4:Ce$, Tb als grüne Komponente und $ZnGdF_5:Eu$ als rote Komponente.

Zur Herstellung des $ZnGdF_5:Eu$ mit 1,0 Mol% Europium werden 29.7 g $GdF_3$, 14,4 g $ZnF_2$, 0,27 g $EuF_3$ gründlich gemischt und in einem Achatmörser gemahlen. Die Mischung wird in einem Korundtiegel in einem Quarzrohr unter Atmosphäre aus Argon mit einem Druck von 8 hPafür 2 h bei 300°C vorgebrannt. Während des Brennen wurde das Quarzrohr 3mal mit Argon gespült und wieder auf 8 hPa evakuiert. Anschließend wurde die Ofentemperatur mit einer Geschwindigkeit von 5,5 °C/min auf 700°C erhöht und die Mischung 24h bei 700 °C gesintert. Das gesinterte Pulver wird erneut gemahlen und auf eine Korngröße < 40 um gesiebt. Die Kristallstruktur der gebildeten Phase wurde räntgendiffraktometrisch überprüft.

Damit wurde eine Lichtausbeute von anfangs 37 lm/W erzielt. Nach 1000 Betriebsstunden lag die Lichtausbeute bei 34 lm/W. Die Quantenausbeute für VUV-Licht liegt bei 70%.

Ausführungsbeispiel 2

Ein zylindrisches Entladungsgefäß aus Glas mit eine Länge von 590 mm, einem Durchmesser von 24 mm und einer Wandstärke von 0,8 mm wird mit Xenon bei einem Druck von 200 hPa gefüllt. Das Entladungsgefäß enthält eine achsparallele Innenelektrode in Form eines Edelmetallstabs mit 2,2 mm Durchmesser. Auf der Außenfläche des Entladungsgefäßes befindet sich die Außenelektrode aus zwei 2 mm breiten Streifen aus Leitsilber, die achsparallel angeordnet und mit der Spannungsversorgung leitend verbunden sind Die Lampe wird mit gepulster Gleichspannung betrieben.

Die Innenwand des Entladungsgefäßes ist mit einer Leuchtstoffschicht beschichtet.

Die Leuchtstoffschicht enthält ein Dreibandenleuchtstoffgemisch mit folgenden Komponenten: $BaMgAl_{10}O_{17}:Eu^{2+}$ als blaue Komponente, $LaPO_4:Ce$, Tb als grüne Komponente und $Li(Gd,In)F_4:Eu$ als rote Komponente.

Zur Herstellung des $Li(Gd,In)F_4:Eu$ mit 1,0 Mol% Europium werden 24,0 g $GdF_3$, 4,8 g $InF_3$, 3,6 g LiF und 0,27 g $EuF_3$ gründlich gemischt und in einem Achatmörser gemahlen. Die Mischung wird in einem Korundtiegel in einem Quarzrohr unter Atmosphäre aus Argon mit einem Druck von 8 hPafür 2 h bei 300°C vorgebrannt. Während des Brennen wurde das Quarzrohr 3mal mit Argon gespült und wieder auf 8 hPa evakuiert. Anschließend wurde die Ofentemperatur mit einer Geschwindigkeit von 5,5 °C/min auf 700°C erhöht und die Mischung 24h bei 700 °C gesintert. Das gesinterte Pulver wird erneut gemahlen und auf eine Korngröße < 40 μm gesiebt. Die Kristallstruktur der gebildeten Phase wurde röntgendiffraktometrisch überprüft.

Damit wurde eine Lichtausbeute von anfangs 37 lm/W erzielt. Nach 1000 Betriebsstunden lag die Lichtausbeute bei 34 lm/W. Die Quantenausbeute für VUV-Licht liegt bei 70%.

Ausführungsbeispiel 3

Ein zylindrisches Entladungsgefäß aus Glas mit eine Länge von 590 mm, einem Durchmesser von 24 mm und einer Wandstärke von 0,8 mm wird mit Xenon bei einem Druck von 200 hPa gefüllt. Das Entladungsgefäß enthält eine achsparallele Innenelektrode in Form eines Edelmetallstabs mit 2,2 mm Durchmesser. Auf der Außenfläche des Entladungsgefäßes befindet sich die Außenelektrode aus zwei 2 mm breiten Streifen aus Leitsilber, die achsparallel angeordnet und mit der Spannungsversorgung leitend verbunden sind Die Lampe wird mit gepulster Gleichspannung betrieben. Die Innenwand des Entladungsgefäßes ist mit einer Leuchtstoffschicht beschichtet.

Die Leuchtstoffschicht enthält ein Dreibandenleuchtstoffgemisch mit folgenden Komponenten: $BaMgAl_{10}O_{17}:Eu^{2+}$ als blaue Komponente und $(Ba,Zn)Gd_2F_8:Ho,Pr$ als grün-rote Komponente.

Zur Herstellung des $(Ba,Zn)Gd_2F_8:Ho,Pr$ mit 1,0 Mol% Holmium und 1,0 Mol% Praseodym werden 29.4 g $GdF_3$, 9,8 g $BaF_2$, 1,4 g $ZnF_2$ 0,31 g $HoF_3$ unf 0,28 g $PrF_3$ gründlich gemischt und in einem Achatmörser gemahlen. Die Mischung wird in einem Korundtiegel in einem Quarzrohr unter Atmosphäre aus Argon mit einem Druck von 8 hPa für 2 h bei 300°C vorgebrannt. Während des Brennen wurde das Quarzrohr 3mal mit Argon gespült und wieder auf 8 hPa evakuiert. Anschließend wurde die Ofentemperatur mit einer Geschwindigkeit von 5,5 °C/min auf 700°C erhöht und die Mischung 24h bei 700 °C gesintert. Das gesinterte Pulver wird erneut gemahlen und auf eine Korngröße < 40 μm gesiebt. Die Kristallstruktur der gebildeten Phase wurde röntgendiffraktometrisch überprüft.

Damit wurde eine Lichtausbeute von anfangs 37 lm/W erzielt. Nach 1000 Betriebsstunden lag die Lichtausbeute bei 34 lm/W. Die Quantenausbeute für VUV-Licht liegt bei 70%.

Ausführungsbeispiel 4

Ein zylindrisches Entladungsgefäß aus Glas mit eine Länge von 590 mm, einem Durchmesser von 24 mm und einer Wandstärke von 0,8 mm wird mit Xenon bei einem Druck von 200 hPa gefüllt. Das Entladungsgefäß enthält eine achsparallele Innenelektrode in Form eines Edelmetallstabs mit 2,2 mm Durchmesser. Auf der Außenfläche des Entladungsgefäßes befindet sich die Außenelektrode aus zwei 2 mm breiten Streifen aus Leitsilber, die achsparallel angeordnet und mit der Spannungsversorgung leitend verbunden sind Die Lampe wird mit gepulster Gleichspannung betrieben. Die Innenwand des Entladungsgefäßes ist mit einer Leuchtstoffschicht beschichtet.

Die Leuchtstoffschicht enthält ein Dreibandenleuchtstoffgemisch mit folgenden Komponenten: $BaMgAl_{10}O_{17}:Eu^{2+}$ als blaue Komponente, $(Y,Gd)BO_3:Eu$ als rote Komponente und $Li(Gd,Ga)F_4:Er,Tb$ als grüne Komponente.

Zur Herstellung des $Li(Gd,Ga)F_4:Er,Tb$ mit 1,0 Mol% Erbium und 1,0 Mol% Terbium werden 24,0 g $GdF_3$, 3,6g $GaF_3$, 3,6 g LiF, 0,31 g $ErF_3$ und 0,3 g $TbF_3$ gründlich gemischt und in einem Achatmörser gemahlen. Die Mischung wird in einem Korundtiegel in einem Quarzrohr unter Atmosphäre aus Argon mit einem Druck von 8 hPa für 2 h bei 300°C vorgebrannt. Während des Brennen wurde das Quarzrohr 3mal mit Argon gespült und wieder auf 8 hPa evakuiert. Anschließend wurde die Ofentemperatur mit einer Geschwindigkeit von 5,5 °C/min auf 700°C erhöht und die Mischung 24h bei 700 °C gesintert. Das gesinterte Pulver wird erneut gemahlen und auf eine Korngröße < 40 μm gesiebt. Die Kristallstruktur der gebildeten Phase wurde röntgendiffraktometrisch überprüft.

Damit wurde eine Lichtausbeute von anfangs 37 lm/W erzielt. Nach 1000 Betriebsstunden lag die Lichtausbeute bei 34 lm/W. Die Quantenausbeute für VUV-Licht liegt bei 70%.

Ausführungsbeispiel 5

Ein zylindrisches Entladungsgefäß aus Glas mit eine Länge von 590 mm, einem Durchmesser von 24 mm und einer Wandstärke von 0,8 mm wird mit Xenon bei einem Druck von 200 hPa gefüllt. Das Entladungsgefäß enthält eine achsparallele Innenelektrode in Form eines Edelmetallstabs mit 2,2 mm Durchmesser. Auf der Außenfläche des Entladungsgefäßes befindet sich die Außenelektrode aus zwei 2 mm breiten Streifen aus Leitsilber, die achsparallel angeordnet und mit der Spannungsversorgung leitend verbunden sind Die Lampe wird mit gepulster Gleichspannung betrieben.

Die Innenwand des Entladungsgefäßes ist mit einer Leuchtstoffschicht beschichtet.

Die Leuchtstoffschicht enthält ein Dreibandenleuchtstoffgemisch mit folgenden Komponenten: $BaMgAl_{10}O_{17}:Eu^{2+}$ als blaue Komponente, $(Y,Gd)BO_3:Eu$ als rote Komponente und $(Ba,Zn)PrF_5:Mn$ als grüne Komponente. Zur Herstellung des $(Ba,Zn)PrF_5:Mn$ mit 1,0 Mol% Mangan werden 249,7 g $PrF_3$, 7,8 g $ZnF_2$, 13,3 g $BaF_2$ und 0,14 g $MnF_2$ gründlich gemischt und in einem Achatmörser gemahlen Die Mischung wird in einem Korundtiegel in einem Quarzrohr unter Atmosphäre aus Argon mit einem Druck von 8 hPa für 2 h bei 300°C vorgebrannt. Während des Brennen wurde das Quarzrohr 3mal mit Argon gespült und wieder auf 8 hPa evakuiert. Anschließend wurde die Ofentemperatur mit einer Geschwindigkeit von 5,5 °C/min auf 700°C erhöht und die Mischung 24h bei 700 °C gesintert. Das gesinterte Pulver wird erneut gemahlen und auf eine Korngröße < 40 μm gesiebt. Die Kristallstruktur der gebildeten Phase wurde röntgendiffraktometrisch überprüft.

Damit wurde eine Lichtausbeute von anfangs 37 lm/W erzielt. Nach 1000 Betriebsstunden lag die Lichtausbeute bei 34 lm/W. Die Quantenausbeute für VUV-Licht liegt bei 70%.

**Patentansprüche**

1. Gasentladungslampe, ausgerüstet mit einem Gasentladungsgefäß, gefüllt mit einer Gasfüllung die geeignet ist für eine Gasentladung, die VUV-Strahlung emittiert, mit einer Leuchtstoffbeschichtung die einen Down-Conversion-Leuchtstoff enthält, und mit Mitteln zur Zündung und Aufrechterhaltung einer Gasentladung bei der der Down-Conversion-Leuchtstoff in einem Wirtsgitter ein Paar von Aktivatoren aus einem ersten Lanthanoid-Ion und einem zweiten Lanthanoid-Ion ausgewählt ist aus der Gruppe Gadolinium(III)-Europium(III); Gadolinium(III)-Holmium(III); Erbium(III)-Gadolinium(III) und Praseodym(III)-Mangan(II), und einen Sensibilisator, ausgewählt aus der Gruppe des Kupfer(I)-Ions, des Silber(I)-Ions, des Gold(I)-Ions, des Zink(II)-Ions, des Gallium(III)-Ions, des Indium(III)-Ions, des Thallium(III)-Ions, des Germanium(IV)-Ions, des Zinn(IV)-Ions und des Blei(IV)-Ions enthält.

2. Gasentladungslampe gemäß Anspruch 1, **dadurch gekennzeichnet,** **dass** der Down-Conversion-Leuchtstoff einen Cosensibilisator ausgewählt aus der Gruppe des Thallium(I)-Ions, des Blei(II)-Ions, des Bismut(III)-Ions, des Indium(I)-Ions, des Zinn(II)-Ions, des Antimon(III)-Ions, des Gallium(I)-Ions, des Germanium(II)-Ions und des Arsen(III)-Ions enthält.

3. Gasentladungslampe gemäß Anspruch 1, **dadurch gekennzeichnet,** **dass** der Down-Conversion-Leuchtstoff einen Cosensibilisator ausgewählt aus der Gruppe des Cer(III)-Ions, des Praseodym(III)-Ions, des Neodym(III)-Ions, des Samarium(III)-Ions, des Europium(III)-Ions, des Gadolinium(III)-Ions, des Terbium(III)-Ions, des Dysprosium(III)-Ions, des Holmium(III)-Ions, des Erbium(III)-Ions, des Thulium(III)-Ions, des Ytterbium(III)-Ions und des Lutetium(III)-Ions enthält.

4. Gasentladungslampe gemäß Anspruch 1, **dadurch gekennzeichnet,** **dass** der Down-Conversion-Leuchtstoff als das erste Lanthanoiden-Ion das Gadolinium(III)-Ion und als das zweite Lanthanoiden-Ion Holmium(III)-Ion oder das Europium(III)-Ion und einen Coaktivator ausgewählt aus der Gruppe des Terbium(III)-Ions, des Ytterbium(III)-Ions, des Dysprosium(III)-Ions, des Europium(III)-Ions, Samarium(III)-Ions und des Mangan(II)-Ions enthält.

5. Gasentladungslampe gemäß Anspruch 1, **dadurch gekennzeichnet,** **dass** das Wirtsgitter des Down-Conversion-Leuchtstoffs ein Fluorid ist

6. Gasentladungslampe gemäß Anspruch 1, **dadurch gekennzeichnet,** **dass** der Down-Conversion-Leuchtstoff das erste Lanthanoiden-Ion in einer Konzentration von 10 bis 99.98 Mol %, das zweite Lanthanoiden-Ion in einer Konzentration von 0.01 bis 30 Mol-% und den Sensibilisator in einer Konzentration von 0.01 bis 30.0 Mol-% enthält.

7. Gasentladungslampe gemäß Anspruch 1, **dadurch gekennzeichnet,** **dass** der Down-Conversion-Leuchtstoff den Sensibilisator in einer Konzentration von 5,0 bis 20,0 Mol-% enthält.

8. Gasentladungslampe gemäß Anspruch 1, **dadurch gekennzeichnet,** **dass** der Down-Conversion-Leuchtstoff den Cosensibilisator in einer Konzentration von 0.01 bis 30 Mol-% enthält.

9. Gasentladungslampe gemäß Anspruch 1, **dadurch gekennzeichnet,** **dass** der Down-Conversion-Leuchtstoff den Coaktivator in einer Konzentration von 0.5 Mol-% enthält.

10. Down-Conversion-Leuchtstoff, der in einem Wirtsgitter ein Paar von Aktivatoren aus einem ersten Lanthanoiden-Ion und einem zweiten Lanthanoiden-Ion ausgewählt ist aus der Gruppe Gadolinium(III)-Europium(III); Gadolinium(III)-Holmium(III); Erbium(III)-Gadolinium(III) und Praseodym(III)-Mangan(II) und einen Sensibilisator, ausgewählt aus Gruppe des Kupfer(I)-Ions, des Silber(I)-Ions, des Gold(I)-Ions, des Zink(II)-Ions, des Gallium(III)-Ions, des Indium(III)-Ions, des Thallium(III)-Ions, des Germanium(IV)-Ions, des Zinn(IV)-Ions und des Blei(IV)-Ions enthält.

**Claims**

1. A gas discharge lamp fitted with a gas discharge vessel filled with a gas filling suitable for a gas discharge which emits VUV radiation, with a luminophore coating containing a down conversion luminophore, and with means for igniting and maintaining a gas discharge, in which the down conversion luminophore contains, in a host lattice, a pair of activators of a first lanthanoid ion and a second lanthanoid ion selected from the group of gadolinium (III)-europium (III); gadolinium (III)-holmium (III); erbium (III)-gadolinium (III) and praseodymium (III)-manganese (II), and a sensitizer selected from the group of the copper (I) ion, silver (I) ion, gold (I) ion, zinc (II) ion, gallium (III) ion, indium (III) ion, thallium (III) ion, germanium (IV) ion, tin (IV) ion and lead (IV) ion.

2. A gas discharge lamp as claimed in claim 1, **characterized in that** the down conversion luminophore has a co-sensitizer selected from the group of the thallium (I) ion, lead (II) ion, bismuth (III) ion, indium (I) ion, tin (II) ion, antimony (III) ion, gallium (I) ion, germanium (II) ion and arsenic (III) ion.

3. A gas discharge lamp as claimed in claim 1, **characterized in that** the down conversion luminophore has a co-sensitizer selected from the group of the cerium (III) ion, praseodymium (III) ion, neodymium (III) ion, samarium (III) ion, europium (III) ion, gadolinium (III) ion, terbium (III) ion, dysprosium (III) ion, holmium (III) ion, erbium (III) ion, thulium (III) ion, ytterbium (III) ion and lutetium (III) ion.

4. A gas discharge lamp as claimed in claim 1, **characterized in that** the down conversion luminophore has as the first lanthanoid ion the gadolinium (III) ion and as the second lanthanoid ion the holmium (III) ion or the europium (III) ion and a co-activator selected from the group of the terbium (III) ion, ytterbium (III) ion, dysprosium (III) ion, europium (III) ion, samarium (III) ion and manganese (II) ion.

5. A gas discharge lamp as claimed in claim 1, **characterized in that** the host lattice of the down conversion luminophore is a fluoride.

6. A gas discharge lamp as claimed in claim 1, **characterized in that** the down conversion luminophore contains the first lanthanoid ion in a concentration of 10 to 99.98 mol%, the second lanthanoid ion in a concentration of 0.01 to 30 mol% and the sensitizer in a concentration of 0.01 to 30.0 mol%.

7. A gas discharge lamp as claimed in claim 1, **characterized in that** the down conversion luminophore contains the sensitizer in a concentration of 5.0 to 20.0 mol%.

8. A gas discharge lamp as claimed in claim 1, **characterized in that** the down conversion luminophore contains the co-sensitizer in a concentration of 0.01 to 30 mol%.

9. A gas discharge lamp as claimed in claim 1, **char-**

**acterized in that** the down conversion luminophore contains the co-activator in a concentration of 0.5 mol%.

10. A down conversion luminophore which, in a host lattice, has a pair of activators of a first lanthanoid ion and a second lanthanoid ion selected from the group of gadolinium (III)-europium (III); gadolinium (III)-holmium (III); erbium (III)-gadolinium (III) and praseodymium (III)-manganese (II), and a sensitizer selected from the group of the copper (I) ion, silver (I) ion, gold (I) ion, zinc (II) ion, gallium (III) ion, indium (III) ion, thallium (III) ion, germanium (IV) ion, tin (IV) ion and lead (IV) ion.

**Revendications**

1. Lampe à décharge de gaz équipée d'une chambre à décharge de gaz remplie d'une charge de gaz qui convient pour une décharge de gaz émettant un rayonnement VUV, avec un revêtement de substance phosphorescente qui contient une substance phosphorescente à abaissement de fréquence et des moyens pour l'allumage et le maintien d'une décharge de gaz, dans laquelle la substance phosphorescente à abaissement de fréquence contient dans une grille hôte une paire d'activateurs à partir d'un premier ion de lanthanide et d'un deuxième ion de lanthanide sélectionné dans le groupe gadolinium (III)-europium(III) ; gadolinium (III)-holmium(III) ; erbium(III)-gadolinium(III) et praséodyme(III)-manganèse(II) et un sensibilisateur sélectionné dans le groupe de l'ion cuivre (I), de l'ion argent (I), de l'ion or (I), de l'ion zinc (II), de l'ion gallium (III), de l'ion indium (III), de l'ion thallium (III), de l'ion germanium (IV), de l'ion étain (IV) et de l'ion plomb (IV).

2. Lampe à décharge de gaz selon la revendication 1, **caractérisée en ce**
   **que** la substance phosphorescente à abaissement de fréquence contient un cosensibilisateur sélectionné dans le groupe de l'ion thallium (I), de l'ion plomb (II), de l'ion bismuth (III), de l'ion indium (I), de l'ion étain (II), de l'ion antimoine (III), de l'ion gallium (I), de l'ion germanium (II) et de l'ion arsenic (III).

3. Lampe à décharge de gaz selon la revendication 1, **caractérisée en ce**
   **que** la substance phosphorescente à abaissement de fréquence contient un cosensibilisateur sélectionné dans le groupe de l'ion cérium (III), de l'ion praséodyme (III), de l'ion néodyme (III), de l'ion samarium (III), de l'ion europium (III), de l'ion gadolinium (III), de l'ion terbium (III), de l'ion dysprosium (III), de l'ion holmium (III), de l'ion erbium (III), de l'ion thulium (III), de l'ion ytterbium (III) et de l'ion lutétium (III).

**4.** Lampe à décharge de gaz selon la revendication 1, **caractérisée en ce que** la substance phosphorescente à abaissement de fréquence contient comme premier ion de lanthanide l'ion de gadolinium (III) et comme deuxième ion de lanthanide l'ion d'holmium (III) ou l'ion d'europium (III) et un coactivateur sélectionné dans le groupe de l'ion terbium (III), de l'ion ytterbium (III), de l'ion dysprosium (III), de l'ion europium (III), de l'ion samarium (III) et de l'ion manganèse (II).

**5.** Lampe à décharge de gaz selon la revendication 1, **caractérisée en ce que** la grille hôte de la substance phosphorescente à abaissement de fréquence est un fluorure.

**6.** Lampe à décharge de gaz selon la revendication 1, **caractérisée en ce que** la substance phosphorescente à abaissement de fréquence contient le premier ion de lanthanide dans une concentration de 10 à 99,98 % en mole, le deuxième ion de lanthanide dans une concentration de 0,01 à 30 % en mole et le sensibilisateur dans une concentration de 0,01 à 30,0 % en mole.

**7.** Lampe à décharge de gaz selon la revendication 1, **caractérisée en ce que** la substance phosphorescente à abaissement de fréquence contient le sensibilisateur dans une concentration de 5,0 à 20,0 % en mole.

**8.** Lampe à décharge de gaz selon la revendication 1, **caractérisée en ce que** la substance phosphorescente à abaissement de fréquence contient le cosensibilisateur dans une concentration de 0,01 à 30 % en mole.

**9.** Lampe à décharge de gaz selon la revendication 1, **caractérisée en ce que** la substance phosphorescente à abaissement de fréquence contient le coactivateur dans une concentration de 0,5 % en mole.

**10.** Substance phosphorescente à abaissement de fréquence qui contient dans une grille hôte une paire d'activateurs à partir d'un premier ion de lanthanide et d'un deuxième ion de lanthanide sélectionné dans le groupe gadolinium(III)-europium(III) ; gadolinium(III)-holmium(III) ; erbium(III)-gadolinium(III) et praséodyme(III)-manganèse(II) et un sensibilisateur sélectionné dans le groupe de l'ion cuivre (I), de l'ion argent (I), de l'ion or (I), de l'ion zinc (II), de l'ion gallium (III), de l'ion indium (III), de l'ion thallium (III), de l'ion germanium (IV), de l'ion étain (IV) et de l'ion plomb (IV).

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- *Journal of Luminescence,* 2000, vol. 90, 111-122